# EUROPEAN PATENT SPECIFICATION

(11) **EP 3 242 996 B1**
(45) Date of publication and mention of the grant of the patent: **06.03.2019**
(21) Application number: 15823760.2
(22) Date of filing: 23.12.2015
(51) Int. Cl.: F01N 13/18, F16L 27/10, F16L 27/11, F16L 51/02, F16L 55/04

(54) **EXTERNAL TUNABLE DAMPING RINGS FOR FLEXIBLE COUPLING**
EXTERNE ABSTIMMBARE DÄMPFUNGSRINGE FÜR FLEXIBLE KUPPLUNG
BAGUES D'AMORTISSEMENT EXTERNES ACCORDABLES POUR RACCORD SOUPLE

(30) Priority: 09.01.2015 US 201562101417 P
(43) Date of publication of application: 15.11.2017
(73) Proprietor: American Boa Inc., Cumming, GA 30040 (US)
(72) Inventor: BARBELY, Eric, Atlanta, GA 30341 (US); GADE, Srinivas, Cumming, GA 30041 (US)
(74) Representative: DREISS Patentanwälte PartG mbB
(86) International application number: PCT/IB2015/002424
(87) International publication number: WO 2016/110737

(56) References cited:
- EP-A1- 1 555 474
- EP-A2- 0 657 683
- EP-A2- 2 441 996
- DE-A1- 2 808 135
- JP-A- 2005 090 316
- US-A- 5 358 287

## Description

### PRIORITY CLAIM

Applicant claims the benefit of the filing date of January 9, 2015 of U.S. Provisional Patent Application Serial No. 62/101,417.

### FIELD OF THE INVENTION

This invention relates to flexible couplings used in gas flow conduits and in particular to flexible couplings used in conduits for hot exhaust gases, for example, from internal combustion engines.

### BACKGROUND OF THE INVENTION

Flexible couplings used in coupling hot gas exhausting conduits typically include an extended bellows or seal of multiple convolutions oriented between exhaust gas conduits or related components. The couplings may include internal liners and surrounding mesh sleeves or braided outer wire sleeves all of which have the undesirable effect of producing noise, vibration and harshness (NVH) to some degree. The harsh NVH environment in which these couplings are used also places the bellow component (seal) at risk for high frequency displacement fatigue if it is not dampened effectively.

Where a surrounding mesh or outer braid overwrap sleeve is used about the bellows convolutions, it typically and constantly contacts outer surfaces of the convolutions serving as a damper for the bellows component. While thus serving as a dampening component such contacting overwrap engages and abrades on the bellows convolutions and NVH from the coupling is produced.

Prior coupling disclosures are cited herewith for background as follows: background: U.S. Patents 6,240,969 and 8,453,680; EP Patents 1967783 B1 and 0458011 B1; and German Patent DE 10 2011 110147. JP 2005 090316 A and US 5 358 287 A disclose similar flexible couplings. In particular, document EP 0458011 B1 discloses a duct element for exhaust ducts of internal-combustion engines comprising a corrugated metallic hose, and means arranged externally of and along this metallic hose and connected to the coupling ends of the metallic hose for the flexible support of the metallic hose against changes in length arising in operation, wherein an annular, flexible, resiliently elastic damping cushion of heat resistant material is arranged between the metallic hose and the longitudinal support means, and wherein between its ends the longitudinal support is radially widened into a barrel shape.

Accordingly, it is one objective of the invention to provide enhanced dampening for couplings having convoluted bellows, whether or not with surrounding mesh sleeves.

A further objective of the invention has been to provide improved flexible couplings for extremely harsh NVH applications where durability of a conventional mesh sleeve as a damper is otherwise compromised.

A further objective of the invention has been to provide improved damping in flexible exhaust gas couplings with or without a mesh or outer braid covering.

### SUMMARY OF THE INVENTION

In one embodiment of the invention, one or more damping rings, are disposed exteriorly about the coupling bellows and in between at least two of the radially extending convolutions of the bellows. Preferably, the coupling does not include any surrounding outer braid or sleeve over the bellows or ring. The ring or rings serve as a damper in place of any such sleeve, and including during any differential thermal response of the bellows. In other alternate embodiments of the invention, an outer braid sleeve is wrapped around the bellows and one or more damping ring or rings reside outside the bellows but between respective convolutions thereof, under the braid, and inwardly of the radially outermost convolutions of the bellows adjacent the ring or rings.

Use of the dampening ring or rings according to the invention eliminates the need to use exterior mesh to dampen natural frequencies of the bellows. When made of the materials noted herein, the damping rings exceed the durability of a mesh damper in harsh NVH applications.

When a convoluted, sleeve-covered bellows coupling is provided according to the invention, with expansion of the convolutions, the damping rings described herein are disposed between bellows convolutions and inwardly of any sleeve and provide additional damping.

The use of damping rings described herein does not restrict the motion capabilities of the bellows, nor disables the movement of the convolutions resulting from any thermal response or other stress.

The location of the damping ring or rings axially along the bellows is adjustable based on the critical frequency of the components of the particular application. Therefore the damping rings can be placed between two convolutions along the bellows component, at one, two or more axial locations such as at first, second or more frequency nodes along the bellows.

### DETAILED DESCRIPTION OF THE DRAWINGS

Fig. 1 is an elevational view in partial cross-section of a coupling bellows with which two damping rings according to the invention herein are used;
Fig. 2 is an end view of a damping ring according to the invention;
Fig. 3 is a cross-section of the damping ring taken along lines 3-3 of Fig. 2;
Fig. 4 is a cross-section illustration of a coupling portion including a damping ring combined with a convoluted bellows, liner and an optional outer braid sleeve or covering;
Fig. 5 is an isometric view of a coupling bellows according to the invention with circular recesses for two damping rings located at the ¼ and ¾ bellows length positions to dampen the shape of bellow nodes and as in Fig. 1 but omitting the liner and optional outer braid of Fig. 4 for clarity;
Fig. 6 is an isometric view of a coupling bellows according to the invention with one circular recess for a damping ring located at the center position at ½ bellows length to dampen the shape of a single bellow node and omitting the internal liner and optional outer braid of Fig. 4 for clarity;
Fig. 7 is an isometric view illustrating a coupling bellows as in Fig. 5 having two damping rings and situated between two pipes shown in phantom; and
Fig. 8 is an isometric view illustrating a coupling bellows as in Fig. 6 having a single damping ring situated between two pipes shown in phantom.

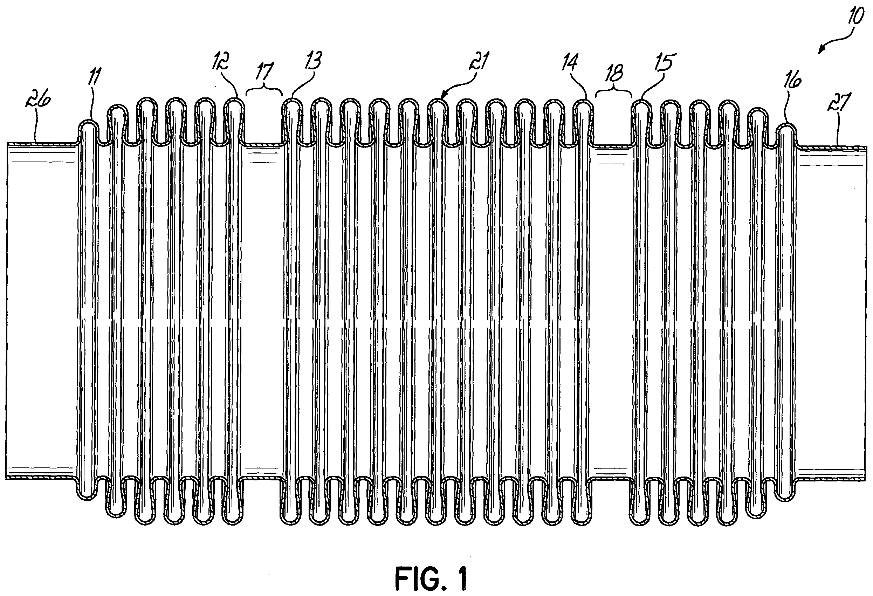

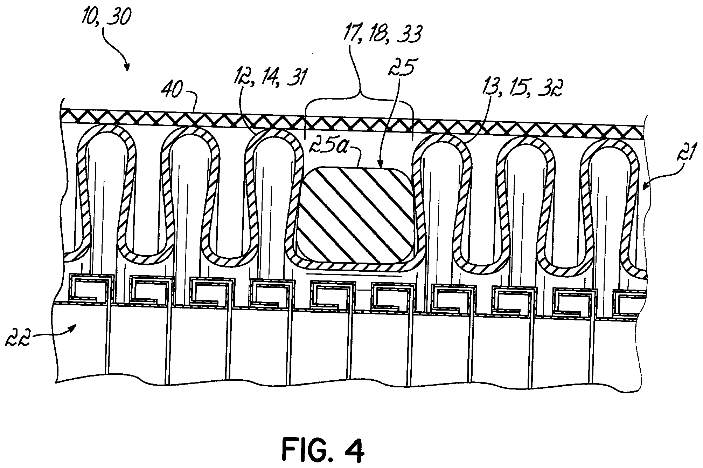

While Figs. 1 and 5-8 illustrate coupling bellows without liners or outer braids such as in Fig. 4, coupling bellows as in these Figs. may in use be combined with such components.

### DETAILED DESCRIPTION OF EMBODIMENTS OF THE INVENTION

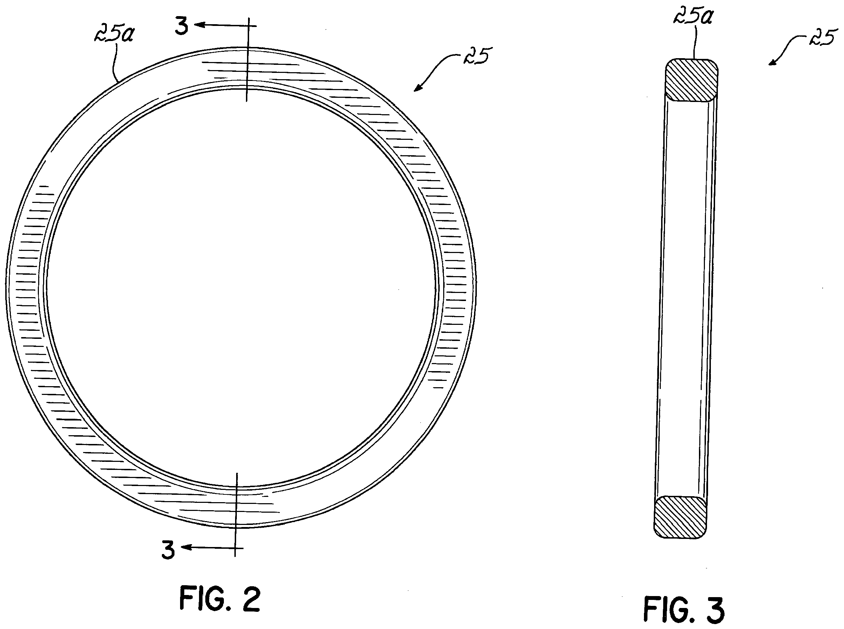

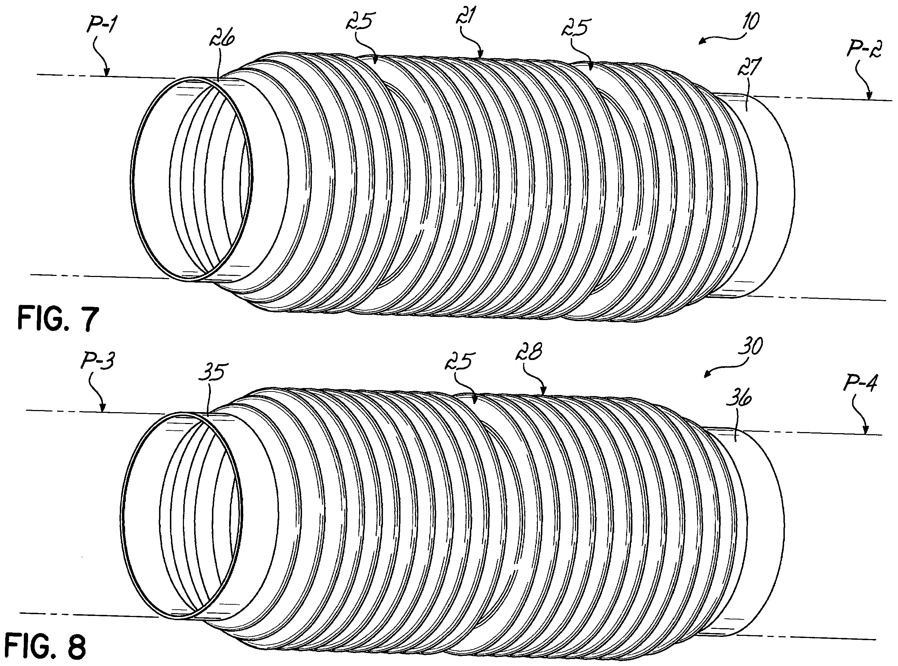

Turning now to the drawings, components of two embodiments are shown in the Figs. A "one-ring" embodiment is illustrated in Figs. 2, 3, 4, 6 and 8 and a "two-ring" embodiment is illustrated in Figs. 1, 5, and 7. Fig. 7 illustrates a coupling bellows 10 with a bellows 21 having two damping rings 25 while Fig. 8 illustrates a coupling bellow 30 with bellows 28 having one damping ring 25. Fig. 7 illustrates coupling bellows 10 situated operationally between pipes P-1 and P-2 while Fig. 8 illustrates coupling bellows 30 situated operationally between two pipes P-3 and P-4.

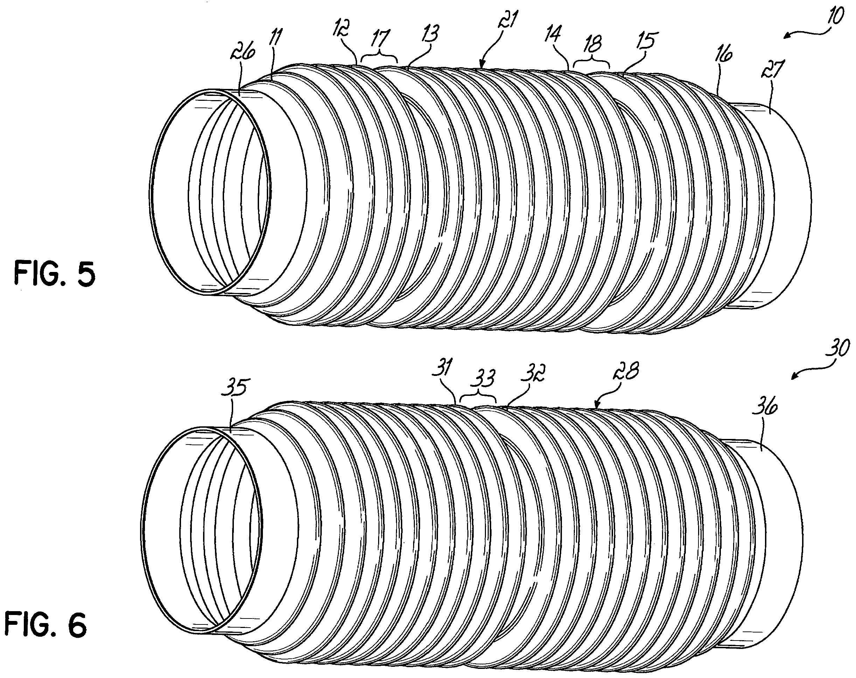

Figs. 1 and 5 illustrate convoluted bellows 21 for a coupling 10, having bellows-like convolutions such as 11-16 for example, and useful in flexible coupling 10. End convolutions 11, 16 are of lesser radial outward extension than other convolutions to support an optional tapering outer braid (not shown except illustratively in Fig. 4) at each end of coupling 10. Bellows 21 includes circumferential ends 26, 27 to facilitate connection, for example, to exhaust pipes P-1, P-2, (shown illustratively in Fig. 7.). Coupling 30 of Figs.6 and 8 has circumferential ends 35, 36 for coupling at pipes P-3, P-4 (Fig.8).

Note the larger (wide-axially) circumferential spaces 17, 18 (Figs. 1 and 5) between respective convolutions 12, 13 and 14, 15 of bellows 21 defining locations where respective damping rings 25 can be placed (as in Fig. 4).

Figs. 2 and 3 illustrate a damping ring 25 according to the invention and useful in both couplings 10 and 30. Ring 25 is made preferably from compressed stainless steel mesh wire and has a preferable density, for example of 2.5 g/cm³, 2.25 g/cm³ or 2.0g/cm³.

Alternately, a ring 25 may be made of other suitable materials such as heat resistant polymers including thermosets, thermoplastics, or elastomers.

Moreover, it will be appreciated that the cross-section of ring 25 (Fig. 3) is such that when the ring is in place, the adjacent bellows convolutions in both embodiments extend radially outside the outer periphery 25a of the ring (see FIG.4). In other words, the radially outermost surface 25a of ring 25 is located radially interiorly if the outermost extensions or height of any adjacent convolutions in both couplings 10, 30. When any optional outer braid 40 (Fig. 4) is used, it is supported by adjacent bellows convolutions radially outward of ring 25 and its outer periphery 25a.

Fig. 4 illustrates a partial cross-section of either coupling 10 or coupling 30 with an optional outer braid 40, bellows 21 (28) and spiral wound liner 22, with ring 25 is shown in partial cross-section in position to dampen the bellows 21 (28) by being positively engaged with the adjacent convolutions 12, 13 (31,32) as shown. Liner 22 is preferably of a spiral wound or interlock construction as shown in Fig. 4 and as known in the industry. Preferably, no outer braid 40 is used in couplings 10, 30 at all; Fig. 4 simply illustrates a ring position such as in either coupling 10, 30 where an optional outer braid 40 is applied. A liner 22 as in Fig. 4 is preferably used in both embodiments (10,30), although not shown in Figs. 1 or 5-8.

As used herein, the term "outer braid" refers to a braided sleeve or any suitable mesh-like sleeve or cover.

With the significant exception of ring 25, its parameters, and the spacing between selected convolutions 12, 13 and 14, 15, one prior structure of a coupling is as seen in European Patent No. EP1467072B / EP1238226B.

Being resilient, ring or rings 25 lie between adjacent convolutions such as 12, 13 and 14, 15, or others as desired and dampens NVH generated in the system, when used in couplings 10, 30 as disclosed herein.

In the embodiment of Fig. 6 (also see Fig. 4), as in coupling 30, a single damping ring 25 is disposed between convolutions 31, 32 of bellows 28 which are disposed apart defining a single circumferential space 33, axially centrally of bellows ends 35, 36 for receiving a single damping ring 25. This embodiment, as in Figs. 6 and 8, preferably does not include any optional outer braid over the bellows. Optionally, a braid 40 as in Fig. 4 may be applied to this embodiment as well. As illustrated in Fig. 4, ring 25 in each embodiment is similar to each other.

In each coupling embodiment 10, 30, ring or rings 25 serve to dampen the couplings without use of optional outer braid 40, the rings serving as the damper for the system.

Preferably the ring or rings 25 are located at axial positions along the respective bellows corresponding to or closely corresponding to expected vibrational nodes in the bellows when the couplings are used in an exhaust gas environment. As illustrated, ring location might be at about ½ the bellows length (coupling 30 in Figs. 6 and 8) or at ¼ and ¾ the bellows length (coupling 10 as in Figs. 5 and 7) or at other locations in couplings according to the invention.

As a result, the invention provides damped bellows for a flexible coupling which is tunable in both density and dampening at critical bellows node positions and on the exterior of the bellows component without restriction of motion capability. The invention eliminates necessary use of an optional mesh outer sleeve component used in the past to dampen bellow natural frequencies, although such a sleeve can be used in conjunction with the invention. Increased ring density provides a damped bellows which exceeds the durability of prior bellows with mesh damper sleeves in harsh NVH applications.

These and other modifications and a advantages will become readily apparent to those of ordinary skill in the art without departing from the scope of the invention as defined by the claims appended hereto.

## Claims

1. A flexible coupling (10; 30) comprising:
a convoluted bellows (21; 28) having a plurality of convolutions (11-16; 31,32);
at least two adjacent convolutions (12, 13; 14, 15; 31, 32) spaced apart further axially than other convolutions in the bellows (21; 28); and
a resilient damping ring (25) to dampen the bellows (21, 28), wherein said resilient damping ring (25) is positively engaged with said at least two adjacent convolutions (12, 13; 14, 15; 31, 32), wherein the resilient damping ring (25) is disposed exteriorly about said bellows (21; 28) and said at least two adjacent convolutions (12, 13; 14, 15; 31, 32) extend radially outward beyond an outward periphery (25a) of said ring (25).

2. A flexible coupling (10; 30) as in claim 1 wherein said coupling (10; 30) includes an outer braid (40) over said bellows (21; 28) with said two adjacent convolutions (12, 13; 14, 15; 31, 32) engaging and holding said outer braid (40) radially spaced from said ring (25).

3. A flexible coupling (10) as in claim 1 including two sets of convolutions (12, 13; 14, 15) in said bellows (21), each set having said two adjacent convolutions (12, 13; 14, 15) spaced apart, and a respective resilient damping ring (25) between said two adjacent convolutions (12, 13; 14, 15) of each said set.

4. A flexible coupling (10) as in claim 1 wherein said ring (25) comprises one of a compressed stainless steel wire mesh, and a heat resistant polymer including at least a thermoset, thermoplastic, or elastomer material.

## Patentansprüche

1. Flexible Kopplungseinrichtung (10; 30), umfassend:
einen gewellten Balg (21; 28) mit einer Vielzahl von Balgwellen (11-16; 31, 32);
mindestens zwei benachbarte Balgwellen (12, 13; 14, 15; 31, 32), die axial weiter auseinander liegen als andere Balgwellen in dem Balg (21; 28); und
einen elastischen Dämpfungsring (25) zum Dämpfen des Balges (21, 28), wobei der elastische Dämpfungsring (25) mit den mindestens zwei benachbarten Windungen (12, 13; 14, 15; 31, 32) formschlüssig verbunden ist, wobei der elastische Dämpfungsring (25) außen um den Balg (21; 28) herum angeordnet ist und sich die mindestens zwei benachbarten Balgwellen (12, 13; 14, 15; 31, 32) radial nach außen über einen Außenumfang (25a) des Rings (25) hinaus erstrecken.

2. Flexible Kopplungseinrichtung (10; 30) nach Anspruch 1, wobei die Kopplungseinrichtung (10; 30) ein äußeres Geflecht (40) über dem Balg (21; 28) beinhaltet, wobei die beiden benachbarten Balgwellen (12, 13; 14, 15; 31, 32) am äußeren Geflecht (40) angreifen und dieses radial von dem Ring (25) beabstandet halten.

3. Flexible Kopplungseinrichtung (10; 30) nach Anspruch 1, die zwei Sätze von Balgwellen (12, 13; 14, 15) in dem Balg (21) beinhaltet, wobei jeder Satz die beiden benachbarten und voneinander beabstandeten Balgwellen (12, 13; 14, 15) und einen entsprechenden elastischen Dämpfungsring (25) zwischen den beiden benachbarten Balgwellen (12, 13; 14, 15) jedes Satzes aufweist.

4. Flexible Kopplungseinrichtung (10; 30) nach Anspruch 1, wobei der Ring (25) entweder ein komprimiertes Edelstahldrahtgewebe und ein hitzebeständiges Polymer umfasst, das mindestens ein duroplastisches, thermoplastisches oder elastomeres Material beinhaltet.

## Revendications

1. Accouplement flexible (10; 30) comprenant:
un soufflet spiralé (21; 28) ayant une pluralité de convolutions (11-16; 31, 32);
au moins deux convolutions adjacentes (12, 13; 14, 15; 31, 32) plus espacées axialement que les autres convolutions du soufflet (21; 28); et
une bague d'amortissement élastique (25) pour amortir le soufflet (21; 28), dans lequel ladite bague d'amortissement élastique (25) est en prise positive avec lesdites au moins deux convolutions adjacentes (12, 13; 14, 15; 31, 32), la bague d'amortissement (25) étant disposé autour dudit soufflet (21; 28) et lesdites au moins deux convolutions adjacentes (12, 13; 14, 15; 31, 32) étant radialement extérieures au dehors, à une périphérie externe (25a) de ladite bague (25).

2. Accouplement flexible (10; 30) selon la revendication 1, dans lequel ledit accouplement (10; 30) comprend une tresse extérieure (40) au-dessus dudit soufflet (21; 28) avec lesdites deux convolutions adjacentes (12, 13; 14, 15; 31, 32) engageant et maintenant ladite tresse extérieure (40) espacée radialement dudit bague (25).

3. Accouplement flexible (10) selon la revendication 1 comprenant deux ensembles de convolutions (12, 13; 14, 15) dans ledit soufflet (21), chaque ensemble ayant lesdites deux convolutions adjacentes (12, 13; 14, 15) espacées, et un bague d'amortissement élastique respectif (25) entre lesdites deux convolutions adjacentes (12, 13 ; 14, 15) de chaque dit ensemble.

4. Accouplement flexible (10) selon la revendication 1, dans lequel ledit bague (25) comprend l'un parmi un treillis métallique en acier inoxydable comprimé, et un polymère résistant à la chaleur comprenant au moins un matériau thermodurci, thermoplastique ou élastomère.
